# EUROPEAN PATENT APPLICATION

(11) **EP 2 277 739 A1**
(43) Date of publication of application: **26.01.2011**
(21) Application number: 10380095.9
(22) Date of filing: 23.07.2010
(51) Int. Cl.: B60P 3/025

(54) **Stage trailer**

(30) Priority: 24.07.2009 ES 200930309 U
(71) Applicant: Laorden Gómez, Isidro, 48993 Santa Maria de Getxo, Vizcaya (ES); Laorden Gómez, Fernando, 48640 Berango, Vizcaya (ES)
(72) Inventor: Laorden Gómez, Isidro, 48993 Santa Maria de Getxo, Vizcaya (ES); Laorden Gómez, Fernando, 48640 Berango, Vizcaya (ES)
(74) Representative: Ungria Lopez, Javier

(57) **Abstract**

The present invention has in principle an unfoldable base structure with legs and a roof structure also unfoldable.

It is **characterized in that** it comprises:
- longitudinal beams wherein mobile beams are guided and inside them end beams are coupled,
- cross beams with legs connected to a bed chassis wherein the longitudinal hollow beams are fixed,
- silage sides coupled to the bed chassis and formed by several hinged parts arranged at both sides of the stage trailer,
- vertical telescopic columns joined to the ends of the mobile beams which have other end legs.

The roof structure connects with the vertical telescopic columns.

## Description

### OBJECT OF THE INVENTION

The present invention, as this specification states in its title, relates to a stage trailer which characteristic structure provides a stage that can be used with the same advantages of a fixed stage.

Thus, the aim of the invention is a stage trailer that can be adapted to the requirements and demands of the great artists with regard to the amplitude and other required characteristics, as if it were a fixed stage.

It is capable to extend its dimension beyond that corresponding to the dimensions themselves of the trailer, thus obtaining a stage with larger dimensions and therefore adaptable to the requirements and demands of the artists, such as previously mentioned.

### BACKGROUND OF THE INVENTION

Currently, more and more concerts are performed at stadiums, bullrings, city or town squares.

Generally, when they are great artists, the required stages must have dimensions that adapt to the requirements and demands of these artists. Therefore, the stages are usually fixed it being required to mount them in situ, as if it were connected components, by joining bars and platforms.

The mounting of these stages is performed by using skilled labor, with leads to a relatively high economic cost.

Likewise, the time invested in performing such mounting and demounting is long, since in addition to the time corresponding to its own mounting and demounting, the time relating to loading and unloading of the constituent elements of the stage of the truck or vehicle that transports them, must be added.

On the other hand, when the given concerts are performed by small orchestras or few artists, mobile stages are usually used.

These mobile stages tend to be truck trailers that carry all the instruments installed therein, its only mounting being to park the trailer and put down one of the sides thereof, such that inside the trailer is the stage.

The drawback of these mobile stages is that, currently their dimensions are those corresponding to the size of the trailer and therefore, the advantage of their facility for mounting and transporting does not apply to the stage requirements demanded by the great artists.

### DESCRIPTION OF THE INVENTION

In order to achieve the objectives and avoid the drawbacks mentioned in the preceding paragraphs, the invention proposes a stage trailer that has the characteristic of being capable of extending its dimension beyond that corresponding to the dimensions themselves of the trailer , thus obtaining a stage with larger dimensions and therefore adaptable to the requirements and demands of the great artists.

The stage is created from the truck trailer as described bellow, emphasizing that it comprises an unfoldable base structure and a roof structure also unfoldable, associated to each other.

Firstly, the front and rear parts of the trailer can be prolonged by extending the longitudinal dimension of the trailer, for which purpose there are two longitudinal hollow beams in the bed chassis, inside of which some mobile beams displaceable toward the outside for the unfolding and displaceable toward the inside for the folding are guided.

Some vertical telescopic columns are located at the end of these mobile beams, columns whose purpose will be the supporting and lifting up the roof structure. Likewise these mobile beams have some end beams therein, which will be those that provide the maximum longitudinal dimension to the stage trailer.

Once the stage trailer is extended to the desired length, some cross beams supporting some silage sides in the unfolded position are then opened. These cross beams are hinged to the bed chassis of the stage trailer being positioned at a 90° angle with regard to the trailer sides. Subsequently, some legs hinged to the cross beams are rocked and lowered, and fixed using lower crossheads.

Once the base support structure described above is mounted and unfolded, the silage sides are lowered, which are divided into several sections or parts hinged to each other, which are lowered from the truck sides using at least one motor element and some tension member coupled to some winding pulleys connected to said motor element.

Once the silage sides are supported on the cross beams they are fixed to them by pins. Likewise these silage sides have telescopic tubes and some individual wood tables therein for mounting the prolonged floor into the extension of the front and rear parts of the stage trailer.

Once the base structure of the stage floor has been mounted, then the mounting of the roof structure is carried out.

Said roof structure includes in principle among its elements a longitudinal master truss associated to some telescopic end trusses, so that when the base structure is prolonged by its front and rear parts, the extension of the telescopic end trusses that are dragged by unfolding the mobile beams from the base structure is also prolonged.

Thus once are extended the assembly of longitudinal master truss and telescopic end trusses, some cross trusses are unfolded, which are hinged to the longitudinal master truss, forming said cross trusses a 90° angle with regard to the longitudinal master truss.

Once extended all the transverse trusses, these are secured using some terminal trusses that bond the ends of such transverse trusses.

Once the roof structure has been mounted, some awnings are then unfolded, which are in principle rolled up on rollers fixed to the longitudinal master truss.

Also, it has to be noted that the longitudinal master truss has the awning corresponding to the truck trailer roof, such that said awning covers the rollers and other elements, and therefore ensures the tightness of the roof since the awning of the longitudinal master truss covers the beginning of the side awnings that are mounted on the cross trusses.

Once the whole roof structure has been mounted is lifted up to the desired height using the vertical telescopic columns. This allows mounting the roof structure, for example, at a height of 1.5 meters, which prevents the need to work with harnesses, and therefore the roof structure is mounted in optimum safety conditions.

On the other hand, the vertical telescopic columns are hoisted up in sections using a hydraulic system, said sections being able to be hoisted in a correlative manner or in the order of interest.

Such sections, as being hoisted, are fixed through pins and are secured with some upper crossheads.

Finally, it should be noted that inside the trailer some independent beams are transported, which are arranged on the sides of the stage so that the artists can mount their sound equipments, television screens, spotlights, etc.

Next, in order to facilitate a better understanding of this specification and being an integral part thereof, figures wherein the object of the invention has been represented with an illustrative and not limitative manner are attached

### BRIEF DESCRIPTION OF THE DRAWINGS

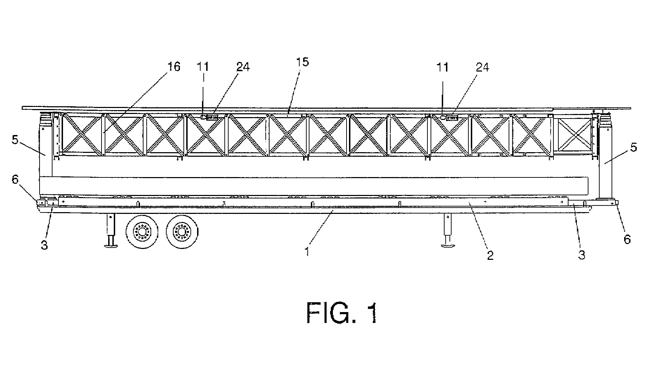

Figure 1. - Shows a side view of the stage trailer, object of the invention.

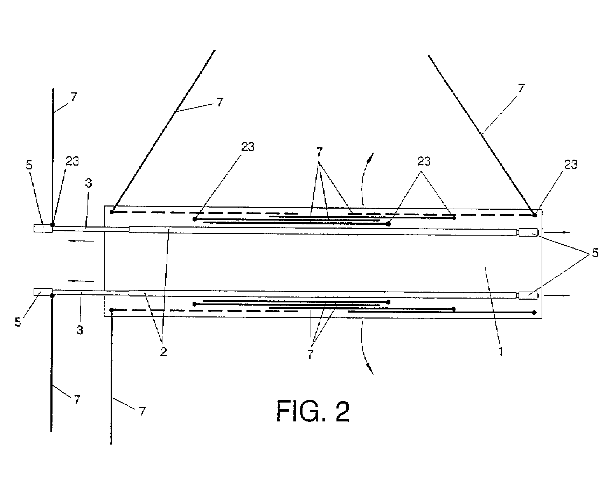

Figure 2. - Represents a schematic view of the stage trailer showing essentially a part of the base structure of the stage in the unfolding process. Said piece includes mainly cross beams.

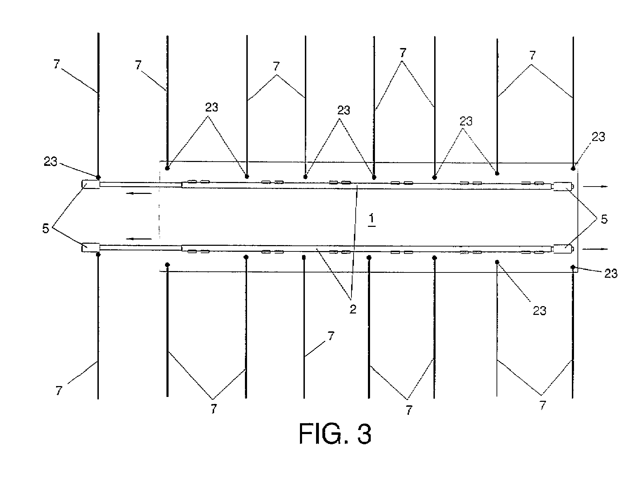

Figure 3. - Shows a view similar to the previous one in a more advanced unfolding process.

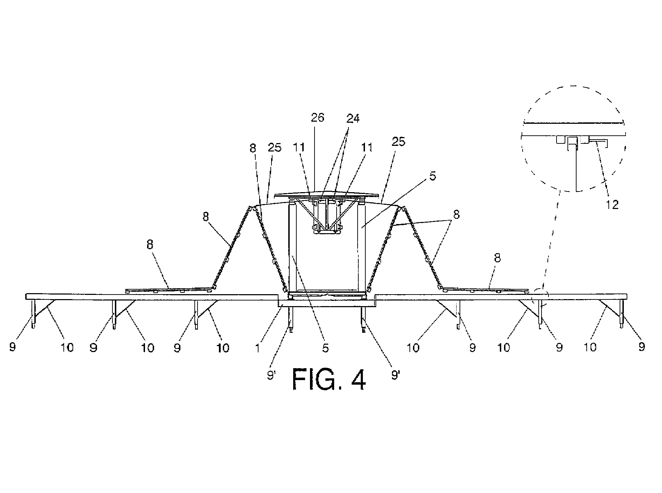

Figure 4. - Represents a front view of the stage trailer showing essentially the unfolding process of some silage sides supported on the cross beams arranged on a horizontal plane in the unfolded position.

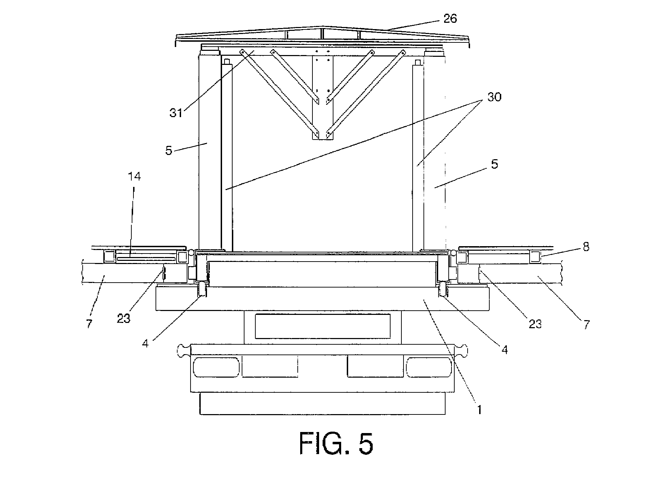

Figure 5. - Shows a rear view of the stage trailer.

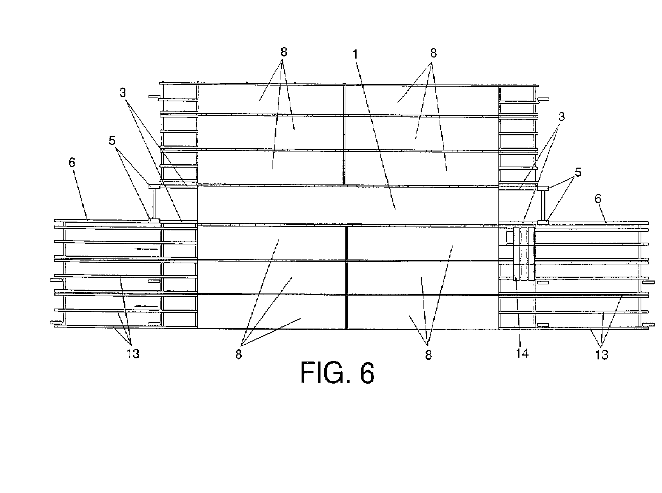

Figure 6. - Shows a plant view of the base structure of the stage.

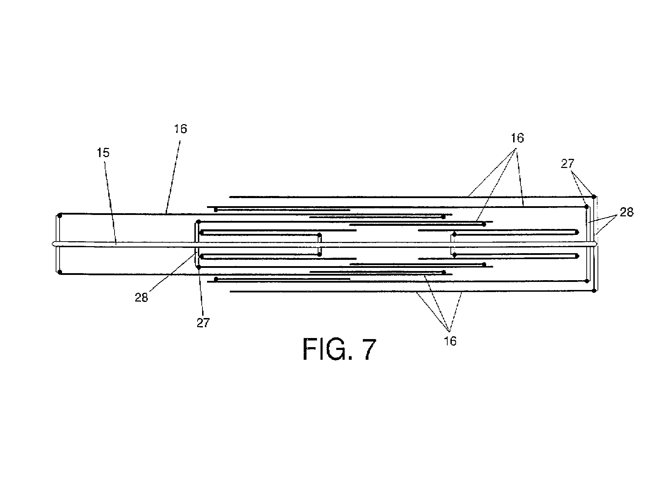

Figure 7. - Shows a schematic view of the roof structure of the stage trailer. It basically comprises a set of unfoldable trusses.

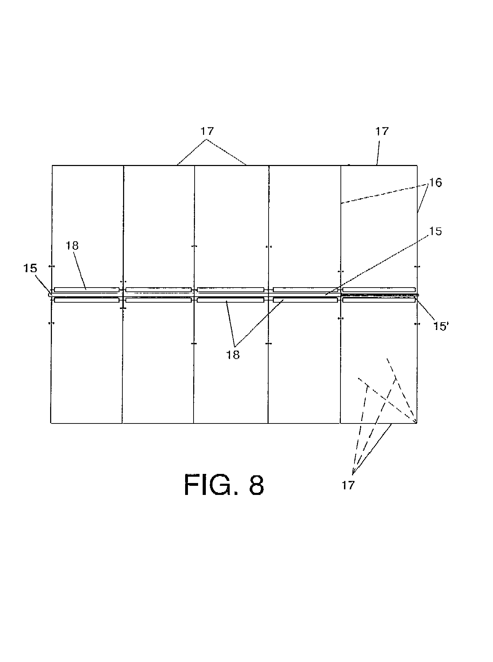

Figure 8. - Shows a schematic view detached from the roof structure.

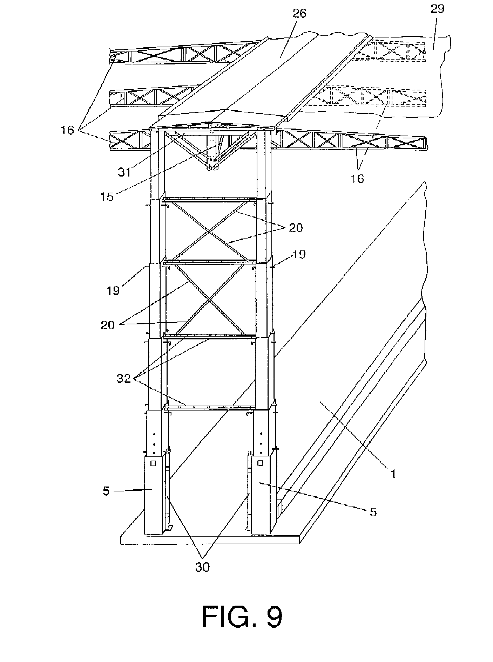

Figure 9. - Shows a perspective view of a part of the stage trailer.

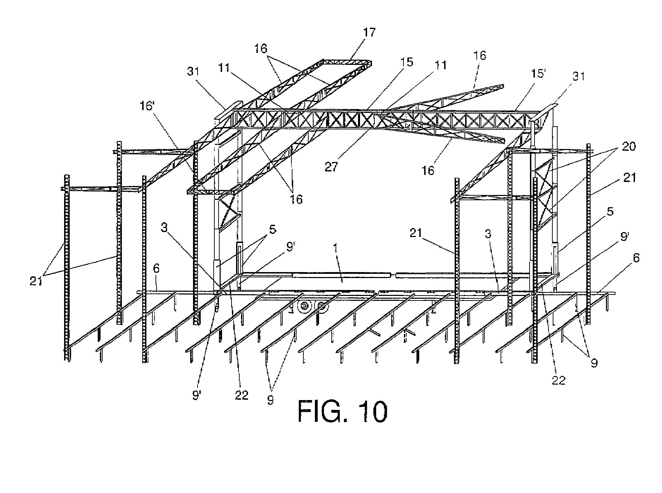

Figure 10. - Shows a perspective view of the total unfolding of the stage trailer of the invention.

### DESCRIPTION OF THE PREFERRED EMBODIMENT

Considering the numbering adopted in the figures, the stage trailer, comprises a bed chassis 1 that supports two longitudinal hollow beams 2 inside of which some mobile beams 3 displaceable over Teflon roller guides coupled to said bed chassis 1 are guided.

At the end of said mobile beams 3 end legs 9' are located inferiorly facing some vertical telescopic columns 5 arranged at the upper part, which will be in charge of supporting the stage roof structure. Likewise, in the mobile beams 3, other end beams 6 are telescopically coupled, wherewith the maximum longitudinal dimension of the stage trailer is reached, at the front part and at the rear part. The mobile beams 3 pairs are joined using cross profiles 22.

Once the stage trailer Is extended to the desired length, some cross beams 7 are unfolded in correspondence with both stage trailer sides by overturning the vertical axes 23, the cross beams 7 supporting in the unfolded position some silage sides 8. Said cross beams 7 are hinged to the bed chassis 1 and are positioned from their folded position to their unfolded position through an overturning of 90° with regard to the longitudinal sides of the stage trailer. Other cross beams 7 are also hingely coupled to the mobile beams 3 and end beams 6.

In the folded position, the cross beams 7 are arranged on successive parallel planes close to each other, through one end of which are hinged to the bed chassis 1 using the articulation axes 23.

After unfolding and extending the cross beams 7, some legs 9 are folded down until locate them vertically, said legs 9 being coupled by one of their ends to the cross beams 7 through some lower crossheads 10.

Once mounted the base structure formed by the described elements, excepting for the silage sides 8, which are folded down and then unfolded downward from their folded position arranged in vertical planes at both sides of the stage trailer to an unfolded horizontal position supported on the cross beams 7. The silage sides 8 comprise several parts hinged to each other, so that are folded and unfolded using electric motors 11, winding pulleys 24 and tension members 25, being the electric motors 11 located in the roof structure 26 of the trailer truck. This roof 26 incorporates telescopic end sections 26' extending toward the outside in the unfolded position.

When the unfolded silage sides 8 are supported on the cross beams 7, these are fixed through pins 12.

The cross beams 7 are located in their folded position bellow the folded silage sides 8.

The structure of the silage sides 8 incorporates telescopic tubes 13 that once the silage sides 8 are unfolded extend longitudinaly, in order to cover the whole extension of the cross beams 7. this added extension of the telescopic tubes 13 being covered with some individual wood tables 14, the extension being prolonged from the front and rear parts of the stage trailer. This extended floor is achieved thanks to some cross beams 7 that articulate extreme areas of the mobile beams 3.

The silage sides 8 support and also house the individual wood tables 14 for completing the prolonged floor in the front and rear extensions of the stage trailer.

Once mounted the stage floor, the mounting of the roof structure is carried out

This roof structure incorporates a characteristic structure of trusses comprising in principle a longitudinal master truss 15, some telescopic end trusses 15' that prolong in the longitudinal extension of the master truss 15 from the front and back of the stage trailer, and transverse trusses 18 hingely joined to the longitudinal master truss 15 and telescopic end trusses 15' through some articulation axes 27 located at the ends of some crossbars 28 that form part of the end 15' and master 15 trusses, emphasizing that the end trusses 15' are joined to the ends of the vertical telescopic columns 5 through a bridge 31, columns which upward extension will drag the trusses, and in general the roof structure assembly.

It should be noted that the displacement of the mobile beams 3 drags the telescopic end trusses 15' by being connected to the vertical telescopic columns 5 through the respective bridges 31.

Some transverse trusses 16 comprise several parts hinged to each other in order to thus reach the required length.

Once extended the telescopic end trusses 15', the unfolding of the transverse trusses 16 is carried out, which, once unfolded will be arranged perpendicularly to the master 15 and telescopic 15' trusses, being the unfolding of such transverse trusses 16 secured through some terminal trusses 17 that associate the ends of adjacent pairs of transverse trusses 16.

Being the roof structure, as mentioned above, the unfolding of some side awnings 29 that are rolled up on some rollers 18 fixed to the longitudinal master truss 15 bellow the stage trailer roof 26 is carried out. The side awnings 29 are unfolded through some guides (not represented in the figures) located along the transverse trusses 16. The longitudinal master truss 15 has the centered awning corresponding to the stage trailer roof 26, so that this centered awning covers the rollers 18 and also the electric motors 11 and other elements, thus securing the tightness of the roof 26, since the centered awning covers the beginning of the side awnings 29 mounted on the transverse trusses 16.

Once unfolded the whole roof structure, it is lifted up to the desired height using the vertical telescopic columns 5. This allows provisionally placing the roof structure assembly at a height close to 1.5 meters so as the mounting operators work better with a higher safety without using harnesses, thus maintaining the roof in optimum safety conditions.

Each pair of vertical telescopic columns 5 associated through the respective bridge 35, are hoisted up using oleohydraulic cylinders 30, being able to hoist up the different sections of the vertical telescopic columns 5 in a correlative manner or in the interested order. Said sections, as being raised, are securing their positions through anchoring pins 19, securing section pairs of vertical telescopic columns 5 using upper crossheads 20 associated to some pairs of bars 32 fixed by their ends to the respective sections of said vertical telescopic columns 5. The oleohydraulic cylinders 30 are fixed to the mobile beams 3 and also to the first static section of the vertical telescopic columns 5.

The pairs of vertical telescopic columns 5 sections, as mentioned above, are bonded through pair or bars 31, on which the upper crossheads 20 for securing the stability and rigidity of the mentioned columns 5 are fixed.

Finally, inside the stage trailer some independent beams 21 are transported, which are vertically mounted on the sides of the unfolded stage assembly for the artists in order to comfortably mount their sound equipments, screens, spotlights, etc.

## Claims

1. STAGE TRAILER, that including an unfoldable base structure with legs and a roof structure also unfoldable, is **characterized in that** the base structure comprises:
- longitudinal hollow beams (2) horizontally arranged and fixed to the bed chassis (1) of the stage trailer, longitudinal hollow beams (2) wherein mobile beams (3) are guided, Inside of which some end beams (6) are telescopically coupled;
- cross beams (7) with legs (9) arranged on the same horizontal plane than the other mentioned beams (2, 3 and 6), said cross beams (7) being hingely connected by an end thereof to both sides of the bed chassis (1) and also to the mobile beams (3) and end beams (6);
- silage sides (8) formed by several parts hinged to each other arranged on both sides of the stage trailer above the cross beams (7), silage sides (8) hingely coupled to the bed chassis (1);
- vertical telescopic columns (5) upwardly arranged and being fixed solidly to the ends of the mobile beams (3), these inferiorly having end legs (9'); being connected to said vertical telescopic columns (5) the roof structure vertically displaceable using these vertical telescopic columns (5).

2. STAGE TRAILER, according to claim 1, **characterized in that** the unfoldable roof structure comprises:
- a longitudinal master truss (15) centrally arranged and on which some telescopic end trusses (15') are coupled;
- transverse trusses (16) hingely coupled to the master (15) and end trusses (15') , through crossbars (28) fixed solidly to such trusses (15, 15');
- end bridges (31) fixed solidly to the telescopic end trusses (15'), end bridges (31) that are also fixed solidly to the ends of the vertical telescopic columns (5);
- terminal trusses (17) that join the ends of the adjacent transverse trusses (16) in the unfolded position.

3. STAGE TRAILER, according to claim 2, **characterized in that** at least some of the transverse trusses (16) comprise several parts hinged to each other.

4. STAGE TRAILER, according to any one of claims 2 or 3, **characterized in that** the silage sides (8) are supported during their folding and unfolding through some tension members (25) associated to winding pulleys (24) connected to at least one motor element (11) anchored to the longitudinal master truss (15) of the roof structure.

5. STAGE TRAILER, according to claim 1, **characterized in that** the silage sides (8) incorporate telescopic tubes (13) longitudinally extending for covering the whole extension of the cross beams (7), namely front area and rear area.

6. STAGE TRAILER, according to claim 5, **characterized in that** the silage sides (8) incorporate wood tables (4) for covering the rear area and the front area that form part of the extension of the cross beams (7) in the unfolded position.

7. STAGE TRAILER, according to any one of the preceding claims, **characterized in that** the mobile beams (3) are supported on roller guides (4) arranged on the bed chassis (1).

8. STAGE TRAILER, according to any one of claims 2 to 7, **characterized in that** the section pairs of the vertical telescopic columns (5) are bonded through pairs of bars (32) and upper crossheads (20) anchored to such pairs of bars (32).

9. STAGE TRAILER, according to any one of the preceding claims, **characterized in that** the extension of the different sections of the vertical telescopic columns (5) is secured using anchoring pins (19) that are inserted through holes of such sections of the vertical telescopic columns (5).

10. STAGE TRAILER, according to claim 8, **characterized in that** the mobility of the vertical telescopic columns (5) is carried out using oleohydraulic cylinders (30) which act on the ends of the respective section pair of the vertical telescopic columns (5).

11. STAGE TRAILER, according to any one of claims 2 to 10, **characterized in that** the roof structure incorporates side awnings (29) located below the stage trailer roof (26), being the side awnings (29) unfolded and guided on the transverse trusses (16).

12. STAGE TRAILER, according to any one of the preceding claims, **characterized in that** it incorporates independent beams (21) that are vertically mounted interrupting the base structure, independent beams (21) on which sound equipments, screens, spotlights, etc are mounted.

13. STAGE TRAILER, according to any one of the preceding claims, **characterized in that** the roof structure incorporates telescopic end sections (26') extending towards the outside in the unfolded position.
